# EUROPEAN PATENT APPLICATION

(11) **EP 2 980 898 A1**
(43) Date of publication of application: **03.02.2016**
(21) Application number: 14774946.9
(22) Date of filing: 26.03.2014
(51) Int. Cl.: H01M 4/66, H01G 11/68, H01M 4/02

(54) **COLLECTOR, ELECTRODE STRUCTURE, BATTERY AND CAPACITOR**

(30) Priority: 29.03.2013 JP 2013074635
(71) Applicant: UACJ Corporation, Tokyo 100-0004 (JP); UACJ Foil Corporation, Chuo-ku Tokyo 1030026 (JP); Furukawa Electric Co., Ltd., Chiyoda-ku Tokyo 100-8322 (JP)
(72) Inventor: KATO, Osamu, Tokyo 100-0004 (JP); SAITO, Sohei, Tokyo 100-0004 (JP); HONKAWA, Yukiou, Tokyo 100-0004 (JP); YAEGASHI, Tatsuhiro, Tokyo 100-0004 (JP); KATAOKA, Tsugio, Kusatsu-shi Shiga 525-0042 (JP); INOUE, Mitsuya, Kusatsu-shi Shiga 525-0042 (JP); YAMABE, Satoshi, Kusatsu-shi Shiga 525-0042 (JP); MORISHIMA, Yasumasa, Tokyo 100-8322 (JP); ITO, Takayori, Tokyo 100-8322 (JP); HARA, Hidekazu, Tokyo 100-8322 (JP); IIDA, Takahiro, Tokyo 100-8322 (JP)
(74) Representative: Gulde & Partner
(86) International application number: PCT/JP2014/058669
(87) International publication number: WO 2014/157405

(57) **Abstract**

A current collector with high safety which can realize both of a superior conductivity at normal temperature conditions and a superior shut down function at high temperature conditions, is provided.

A current collector, including a conductive substrate; and a resin layer provided on at least one side of the conductive substrate, is provided. Here, the resin layer is formed with a paste containing an aggregate of polyolefin-based emulsion particles; and a conductive material. Further, the aggregate has an average particle diameter of 0.5 to 5µm.

## Description

### TECHNICAL FIELD

The present invention relates to current collectors, electrode structures, batteries, and capacitors.

### BACKGROUND

Regarding lithium ion batteries in the vehicle and the like, a high speed charge/discharge characteristics (high rate characteristics) is required at usual usage, and a so-called shut down function (PTC function) to terminate charge/discharge automatically and safely is required when an accident such as malfunction occurs. With respect to the former requirement, a technique to minimize the grain size of the active material and a technique to form a conductive layer onto the current collector has been known. On the other hand, with respect to the latter requirement, a system to improve the safety of the battery has been made. For example, a safety valve is used to prevent the inner pressure from increasing, and a structure to cut off the current when heat generation occurs is provided by incorporating a PTC (Positive Temperature Coefficient) element. Here, the PTC element is an element of which resistance value increases along with the increase in temperature. Regarding batteries, a technique to provide the shut down function to a separator has been known. The separator fuses at high temperature, and thus micropores are blocked. Accordingly, ionic conduction is blocked, thereby terminating the electrode reaction under overheated circumstances. However, there are cases where the shut down by the separator is incomplete and thus the temperature increases to above the melting point of the separator, and cases where the temperature increase in the external surroundings result in the meltdown of the separator. Such cases would result in an internal short-circuit. Then, the shut down function of the separator can no longer be counted on, and the battery would be in the state of thermal runaway.

Accordingly, a technique which provides charge/discharge characteristics during usual usage and improves safety when accidents such as malfunction occur, has been suggested. For example, Patent Literature 1 discloses a positive electrode current collector prepared by adhering a sheet-like conductive polymer (50µm thickness) onto an aluminum net (20µm thickness), the sheet-like conductive polymer having a PTC characteristics of 5S/cm conductivity at room temperature and 5µS/cm conductivity at a working temperature of 120°C. In addition, it is described that the sheet-like conductive polymer used here is prepared by mixing 30 wt% of polyethylene with 70 wt% of carbon black (paragraph 0048 of Patent Literature).

In addition, Patent Literature 2 discloses of uniformly coating a conductive paste onto both sides of the expanded metal of aluminum or copper, using a die coater or a gravure coater, followed by drying of the paste, thereby obtaining a current collector having a conductive layer (0.5µm thickness) formed thereon. Here, the conductive paste is prepared by adding 35g of crystalline polyethylene resin having a melting point of 110°C and 30g of acetylene black as the carbon-based conductive material to 270g of an N-methyl-2-pyrrolidone (NMP) solution of polyvinylidene difluoride (PVDF) (13% solids), followed by kneading using a planetary mixer. Subsequently, 440g of NMP is further added to dilute the conductive paste (paragraph 0029 of Patent Literature 2).

In addition, Patent Literature 3 discloses of mixing the acetylene black as the conductive material and polyethylene having a softening point of 120°C as the binding polymer with a weight ratio of 10:1, followed by addition of suitable amount of carboxymethyl cellulose as a thickener to give a paste mixture. Subsequently, the mixture is coated onto both sides of the aluminum foil having a thickness of 10µm, as the positive electrode current collector. The mixture is coated with a thickness of 5µm or less. Then, the coating is dried to obtain a resistive layer (lines 1 to 6, page 13 of Patent Literature 3).

In addition, in Patent Literature 4, a coating having fine particles dispersed in the binder resin is formed. Here, the fine particles are prepared by crushing an electron conducting material containing a conductive filler and a resin, the electron conducting material showing higher resistance as the temperature rises. Further, this literature mentions that the fine particles function so as to show higher resistance as the temperature rises.

### CITATION LIST

### PATENT LITERATURE

Patent Literature 1: JP H10-241665A
Patent Literature 2: JP 2001-357854A
Patent Literature 3: WO 2002/54524A
Patent Literature 4: JP 4011635B

### SUMMARY OF THE INVENTION

### TECHNICAL PROBLEM

However, regarding the conventional techniques described in the afore-mentioned literatures, they still had room for further improvement, in terms of the following, and thus were problematic in providing secure safety.

First of all, in Patent Literatures 1 to 3, since polyvinylidene difluoride and polyethylene are thermoplastic resins, there are cases where the thermoplastic resins fuse when the temperature reaches above 100°C during the active material coating process, thereby resulting in a condition different from the condition before fusing. Therefore, the temperature during manufacture of the lithium ion secondary batteries, lithium ion capacitors and the like cannot exceed 100°C, thereby resulting in cases where the productivity is low.

Secondly, in Patent Literature 3, when the current collector was used for the lithium ion secondary batteries, lithium ion capacitors and the like, the so called high rate characteristics of the high speed charge/discharge was not sufficient. Therefore, the current collector was not suitable for high speed charge/discharge under usual conditions.

Thirdly, in Patent Literature 4, since the conductive fillers (conductive material) were dispersed in the resin, there was a defect in that the resistance value cannot be made sufficiently high.

The present invention has been made by taking the afore-mentioned circumstances into consideration. An object of the present invention is to provide a current collector having high safety, which can achieve both of superior conductivity under normal temperature conditions and superior shut down function under high temperature conditions.

### SOLUTION TO PROBLEM

According to the present invention, a current collector, comprising: a conductive substrate; and a resin layer provided on at least one side of the conductive substrate, is provided. Here, the resin layer is formed with a paste comprising: an aggregate of polyolefin-based emulsion particles; and a conductive material. Further, the aggregate has an average particle diameter of 0.5 to 5µm.

According to such current collector, since the current collector uses an aggregate of the polyolefin-based emulsion particles and the average particle diameter of such aggregate is 0.5 to 5 µm, both of the superior conductivity under normal temperature conditions and superior shut down function under high temperature conditions can be achieved.

According to the present invention, an electrode structure comprising the afore-mentioned current collector is obtained. In addition, according to the present invention, a battery or a capacitor comprising the afore-mentioned electrode structure is obtained.

According to such electrode structure, battery or capacitor, since the afore-mentioned current collector is used, both of the superior conductivity under normal temperature conditions and superior shut down function under high temperature conditions can be achieved.

### EFFECT OF THE INVENTION

According to the present invention, both of the superior conductivity under normal temperature conditions and superior shut down function under high temperature conditions can be achieved.

### BRIEF DESCRIPTION OF THE DRAWINGS

[FIG. 1] FIG. 1 is a cross-sectional view showing a structure of a current collector according to one embodiment of the present invention.
[FIG. 2] FIG. 2 is a cross-sectional view showing a structure of an electrode structure according to one embodiment of the present invention.
[FIG. 3] FIG. 3 is a schematic diagram showing the coating condition of the surface of the polyolefin-based emulsion particles covered with the conductive material, used in one embodiment of the present invention.
[FIG. 4] FIG. 4 is a schematic diagram showing the mechanism of PTC function realization when the aggregate of the polyolefin-based emulsion particles according to one embodiment of the present invention is used.
[FIG. 5] FIG. 5 is a schematic view showing a condition of inside the resin layer of the electrode structure under normal temperature conditions, according to one embodiment of the present invention (a case where conductive material is added after aggregating the polyolefin-based emulsion particles by using the polymer coagulant).
[FIG. 6] FIG. 6 is a schematic view showing a condition of inside the resin layer of the electrode structure under normal temperature conditions, according to one embodiment of the present invention (a case where conductive material is added after aggregating the polyolefin-based emulsion particles by using the polymer coagulant and low molecular coagulant).
[FIG. 7] FIG. 7 is a schematic view showing a condition of inside the resin layer of the electrode structure under normal temperature conditions, according to one embodiment of the present invention (a case where the polyolefin-based emulsion particles are aggregated by using the polymer coagulant, after conductive material is added).
[FIG. 8] FIG. 8 is a schematic view showing a condition of inside the resin layer of the electrode structure under normal temperature conditions, according to one embodiment of the present invention (a case where the polyolefin-based emulsion particles are aggregated by using the polymer coagulant and low molecular coagulant, after conductive material is added).

### DESCRIPTION OF EMBODIMENTS

Hereinafter, the embodiments of the present invention will be explained with reference to the drawings. Here, in all of the drawings, the same symbols are provided for the similar constitutional elements, and the explanations for them are omitted where applicable. In addition, "A to B" in the present specification shall mean "A or more and B or less".

### <Entire Structure>

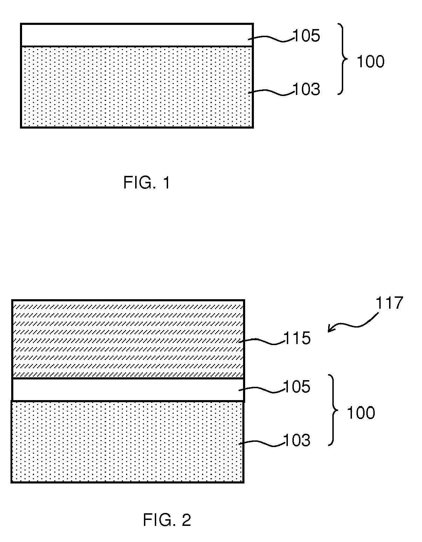

FIG. 1 is a cross-sectional view showing the structure of the current collector of the present embodiment. The current collector 100 of the present embodiment comprises a resin layer 105 having conductivity provided on at least one side of the conductive substrate 103.

FIG. 2 is a cross-sectional view showing the structure of the electrode structure prepared by using the current collector of the present embodiment. On the resin layer 105 of the current collector 100 of the present embodiment, an active material layer 115 is formed. Accordingly, the electrode structure 117 suitable for the non-aqueous electrolyte batteries such as lithium ion secondary batteries and the like can be prepared.

### <Circumstances of the Invention>

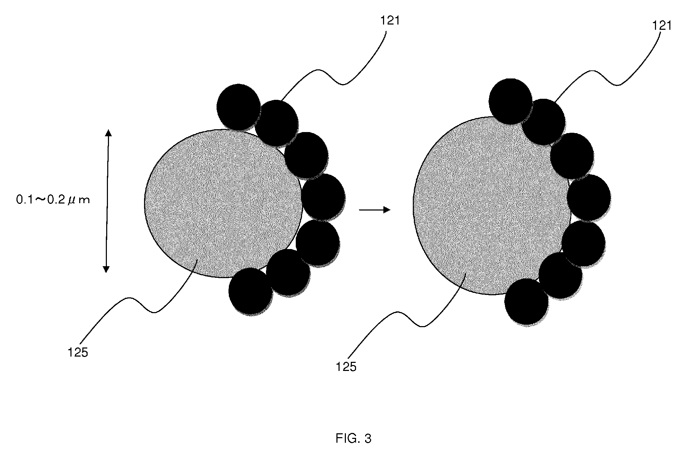

FIG. 3 is a schematic diagram showing the coating condition of the surface of the polyolefin-based emulsion particles being covered with the conductive material, used in the present embodiment. In order to solve the afore-mentioned problem, the present inventors have used the polyolefin-based emulsion particles 125 having superior dispersibility in an aqueous solution as the resin structuring the paste being coated onto the conductive substrate 103. However, since the particle diameter of the polyolefin-based emulsion particles 125 were 0.1µm or larger and less than 0.4µm, the amount of deformation caused by thermal expansion was small. Accordingly, the cut off of the conductive path (cut off of the connection between the conductive materials 121) by temperature increase was not sufficient.

Accordingly, the present inventors have added a crosslinker to this paste to crosslink the polyolefin-based emulsion particles 125, thereby forming a large crosslinked product. However, this resulted in increase in the resistance at normal temperature due to generation of gas and water by the crosslinking reaction. On the other hand, when the polyolefin-based emulsion particles 125 were aggregated to form a large aggregated product, the resistance at normal temperature was maintained low since there was no generation of gas and water. Then, the present inventors have made an investigation on the PTC function for a case where the polyolefin-based emulsion particles 125 were aggregated to obtain a large aggregated product. Accordingly, the present inventors found that both of the superior conductivity under normal temperature conditions and superior shut down function under high temperature conditions can be achieved, resulting in accomplishment of the present invention.

### <Mechanism of PTC Function Realization>

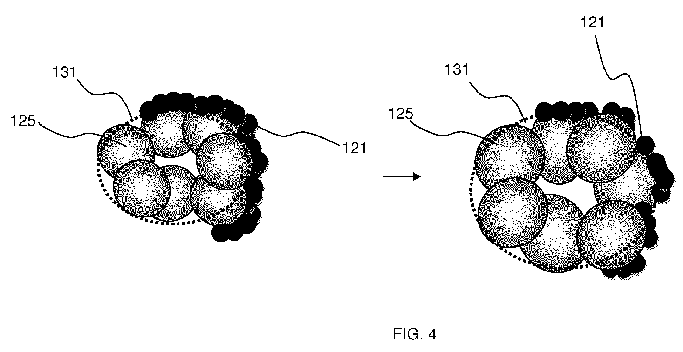

FIG. 4 is a schematic diagram showing the mechanism of PTC function realization when the aggregate of the polyolefin-based emulsion particles of the present embodiment is used. The resin layer 105 of the current collector 100 of the present embodiment comprises a paste including an aggregate 131 of the polyolefin-based emulsion particles 125 and a conductive material 121. Here, the coating weight when this paste is coated onto the conductive substrate 103 is preferably 0.5 to 20 g/m². In addition, the average particle diameter of the aggregate is 0.5 to 5µm.

The conductive material 121 is distributed on the surface or in the gap of the polyolefin-based emulsion particles 125 or the aggregate 131 of the polyolefin-based emulsion particles 125 and are in contact with each other during normal usage. Here, the conductive material 121 do not get inside the polyolefin-based emulsion particles 125.

The resin layer 105 of the present embodiment realizes the PTC function when an accident occurs. The particle diameter of the polyolefin-based emulsion particles 125 itself is as small as 0.1µm or larger and smaller than 0.4µm. However, the particle diameter of the aggregate 131 of the polyolefin-based emulsion particles 125 is in a suitable range of 0.5 to 5µm, thereby providing large deformation by thermal expansion. Accordingly, cut off of the conductive path (cut off of the connection between conductive material 121) by temperature increase is sufficient. That is, the aggregate 131 of the polyolefin-based emulsion particles 125 expands by thermal expansion, thereby cutting off the network of the conductive material 121 adhered onto the aggregate 131. Accordingly, the resistance is increased.

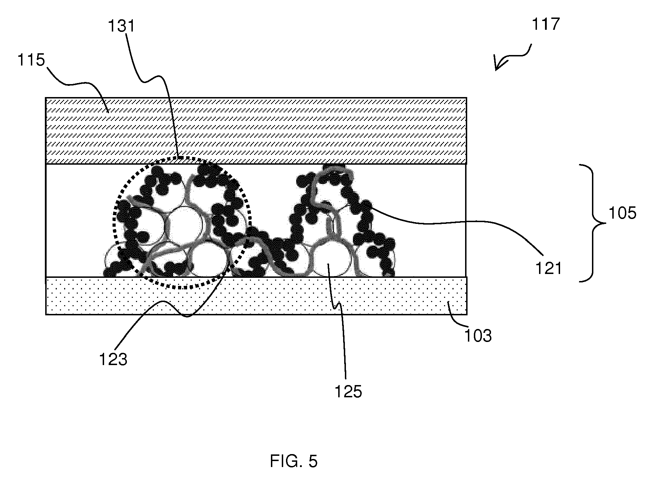

As shown in FIGs. 5 to 8 mentioned later, in the present embodiment, the conductive material 121 efficiently (with minimum amount) forms the conductive path under normal temperature conditions. Therefore, superior conductivity is achieved under normal temperature conditions. On the other hand, when the temperature rises, cut off of the conductive path tends to occur by the expansion of the aggregate 131 of the polyolefin-based emulsion particles 125. Therefore, in the present embodiment, sufficient battery property and PTC function can be obtained with a relatively small amount of conductive material 121 when compared with the case where the olefin-based resin which dissolves in an organic solvent is used. That is, in the present embodiment, a current collector 100 which can achieve both of superior conductivity under normal temperature conditions and superior shut down function under high temperature conditions, can be realized.

### <Explanation of Each of the Constituents>

### (1. Conductive Substrate)

The current collector 100 of the present embodiment is prepared by coating a paste onto at least one side of the conductive substrate 103. As the conductive substrate 103, conductive substrate 103 known as various metal foils for non-aqueous electrolyte batteries, electrical double layer capacitors, or lithium ion capacitors can generally be used. Specifically, various metal foils for the positive electrode and negative electrode can be used, such as foils of aluminum, aluminum alloy, copper, stainless steel, and nickel. Among these, foils of aluminum, aluminum alloy, and copper are preferable in terms of the balance between conductivity and cost.

There is no particular limitation regarding the thickness of the conductive substrate 103. Here, the thickness is preferably 5µm or more and 50µm or less. When the thickness is less than 5µm, the strength of the foil would be insufficient, thereby resulting in cases where formation of the resin layer becomes difficult. On the other hand, when the thickness exceeds 50µm, other constituents, especially the active material layer or the electrode layer need be made thin to compensate such thickness, when such conductive substrate is used for the non-aqueous electrolyte batteries, and electrical storage devices such as electrical double layer capacitors and lithium ion capacitors. Accordingly, there would be a case where necessary capacity cannot be obtained. Here, the thickness of the conductive substrate 103 can be in the range of two values selected among 5, 10, 15, 20, 25, 30, 35, 40, 45, and 50µm.

### (2. Polyolefin-based Emulsion Particles)

FIG. 3 is a schematic diagram showing the structure of the polyolefin-based emulsion particles used in the present embodiment. There is no particular limitation regarding the polyolefin-based emulsion particles 125 used in the present embodiment. For example, the polyolefin-based emulsion particles preferably contain at least one resin having a large linear expansion coefficient and a superior adhering property selected from the group consisting of a polypropylene resin, a polyethylene resin, a polypropylene copolymer resin, and a polyethylene copolymer resin. Especially preferably, polypropylene resin, polyethylene resin, polyethylene-polypropylene block copolymer resin, polyethylene-polypropylene graft copolymer resin and the like can be used as the polyolefin-based emulsion particles. In addition, one of these resins can be used alone, or two or more resins can be used in combination.

In addition, the polyolefin-based resin structuring the afore-mentioned polyolefin-based emulsion particles 125 can be modified with a carboxylic acid (or a carboxylic acid anhydride), or can be not modified with a carboxylic acid (or a carboxylic acid anhydride). Here, the resin component used for the resin layer 105 of the present embodiment can comprise only the afore-mentioned polyolefin-based emulsion particles 125, or can contain other resin components. However, it is unfavorable to use a solution type polyolefin-based resin (in organic solvent) which does not form emulsion particles, since it is difficult for the resistance to increase when the PTC function is realized.

Here, there is no particular limitation regarding the carboxylic acid (or carboxylic acid anhydride) for modifying the afore-mentioned polyolefin-based resin. For example, it is preferable to use maleic acid, acrylic acid, pyromellitic acid, citric acid, tartaric acid, oxylaic acid, mellitic acid, terephthalic acid, adipic acid, fumaric acid, itaconic acid, trimellitic acid, or isophthalic acid. Here, either one of these acids can be an acid anhydride.

The average particle diameter of the polyolefin-based emulsion particles itself (primary particles) used in the present embodiment is preferably 0.1µm or more and less than 0.4µm. The primary particles mentioned here are particles formed by dispersing the polyolefin-based resin in water and the like. When the particle size of the primary particles is less than 0.1µm, the particle size of the secondary aggregate of the polyolefin-based emulsion particles 125 would only be less than 0.5µm. On the other hand, when the particle size of the primary particles exceeds 0.4µm, the particle size of the aggregate would become too large, and thus defects such as increase in resistance at room temperature and unstable coating conditions would occur, resulting in failure to obtain the desired current collector.

### (3. Aggregate)

The aggregate 131 of the polyolefin-based emulsion particles 125 formed in the resin layer 105 of the present embodiment has a larger structure (secondary particles or particles of higher dimensions) by aggregation of the plurality of polyolefin-based emulsion particles 125 themselves (primary particles). Here, this aggregate can easily be formed by using a polymer coagulant and/or low molecular coagulant described later. However, coagulant need not necessarily be used.

The average particle diameter of the aggregate 131 is 0.5 to 5µm, preferably 1 to 5µm, and more preferably 2 to 5µm. When the average particle diameter of the aggregate 131 is less than 0.5µm, the amount of deformation by the thermal expansion at elevated temperature would not be sufficient. On the other hand, when the average particle diameter of the aggregate 131 exceeds 5µm, the coating would become too thick, resulting in defects such as resistance increase at room temperature and unstable emulsion solution which would cause separation of the components. In addition, since the aggregate 131 is an aggregate of primary particles, there are many fine concave and convex portions compared with the primary particles (the contact portion of the primary particles become the concave and convex portions), and thus the conductive material 121 easily adhere. Accordingly, when the particle diameter is the same, the aggregate 131 has an advantage in that it can lower the resistance at normal usage. Here, the average particle diameter of the aggregate 131 can be calculated by measuring the particle diameter distribution of a paste prepared without formulating the conductive material 121, using a particle size analyzer. As the particle size analyzer, commercially available apparatuses utilizing the dynamic light scattering method, laser diffraction/scattering method, image imaging method, and the like can suitably be used.

### (4. Conductive Material)

The polyolefin-based emulsion particles 125 used for the resin layer 105 of the present embodiment need be formulated with a conductive material 121 in order to provide electron conductivity. As the conductive material 121 used in the present embodiment, known carbon powders and metal powders can be used. Among these, carbon powders are preferable. As the carbon powders, acetylene black, Ketjen black, furnace black, carbon nanotubes, and various graphite particles can be used. In addition, the average particle diameter of the conductive material 121 is preferably 100 nm or smaller. When the particle diameter is too large, separation tends to occur during storage of the coating, and thus the coating would become uneven when coated, thereby making it difficult to cut off the conductive path when the temperature is raised. The average particle diameter of the conductive material 121 is more preferably 60 nm or smaller. In order to disperse the conductive material 121 in the paste, a planetary mixer, a ball mill, a homogenizer and the like can be used.

There is no particular limitation regarding the formulation amount of the conductive material 121 of the present embodiment. Here, in order to realize the desired PTC function with high safety, it is preferable that the safety to realize the PTC function can be maintained with a small amount of the binder resin compared with that for the normal carbon coatings and active material layer.

In particular, with respect to 100 parts by mass of the resin component of the polyolefin-based emulsion particles 125, the formulation amount of the conductive material 121 is preferably 5 to 50 parts by mass, more preferably 6 to 45 parts by mass, and further preferably 8 to 40 parts by mass. When the formulation amount of the conductive material 121 is 5 parts by mass or less, the volume resistivity of the resin layer 105 becomes high, resulting in cases where sufficient conductivity as the current collector 100 cannot be obtained. On the other hand, when the formulation amount of the conductive material 121 exceeds 50 parts by mass, the connection between the conductive materials 121 cannot be cut off even when the volume is expanded, resulting in cases where sufficient resistance cannot be obtained. Here, the formulation amount of the conductive material 121 can be in the range of two values selected among 5, 6, 7, 8, 9, 10, 15, 20, 25, 30, 35, 40, 45, and 50 parts by mass.

There is no particular limitation regarding the coverage ratio of the surface of the aggregate 131 of the polyolefin-based emulsion particles 125 of the present embodiment being covered with the conductive material 121. In order to achieve both of the superior conductivity under normal temperature conditions and superior shutdown function under high temperature conditions, the coverage ratio is preferably 5 to 90%, more preferably 10 to 80%, and further preferably 15 to 70%. When the coverage ratio is less than 5%, characteristics of the battery or the capacitor such as conductivity can become insufficient regarding the usage under normal temperature conditions. On the other hand, when the coverage ratio exceeds to 90%, there are cases where the conductive path cannot be cut off sufficiently when the temperature is raised. Here, the coverage ratio can be in the range of two values selected among 5, 10, 15, 20, 25, 30, 35, 40, 45, 50, 55, 60, 65, 70, 75, 80, 85, and 90%.

Here, the coverage ratio can be measured by first coating the conductive substrate 103 with a paste, and then performing an observation of a cross section of the coating regarding the resin layer 105 formed with the paste. The ratio of the surface of the aggregate 131 of the emulsion-particles 125 being covered with the conductive material 121 is the coverage ratio by the conductive material 121.

In the present embodiment, the coverage ratio by the conductive material 121 can be measured by exposing the cross section using an ion milling, and then obtaining the ratio of the surface of the aggregate 131 being covered with the conductive material 121. Here, as the position of observation, the coating is cut at 10 portions to expose the cross sections, and then 10 arbitrary portions for each of the cross sections are selected (100 in total). The average of the coverage ratio obtained from each of the observation made at each of the selected portion is then calculated.

### (5. Formulation of Paste)

The paste used in the present embodiment can be formulated with an arbitrary method. For example, the paste can be formulated by a method as described below.

### (1) Embodiment Having Conductive Material Mainly on the Surface of the Aggregate (Surface of Secondary Particles)

### (1-1) Only Polymer Coagulant Used

FIG. 5 is a schematic view showing the condition of inside the resin layer of the electrode structure under normal temperature conditions, according to the present embodiment (a case where conductive material is added after aggregating the polyolefin-based emulsion particles by using the polymer coagulant). First, the aggregate 131 of 0.2 to 5µm is formed by adding the polymer coagulant 123 to the polyolefin-based emulsion particles 125 (for example, water-borne emulsion such as polypropylene), followed by mixing. Here, when only the polymer coagulant 123 is used, the average particle diameter of the aggregate 131 tends to become small.

Then, conductive material 121 is further added, followed by mixing, thereby allowing the conductive material 121 to adhere onto the surface of the aggregate 131 to achieve the coverage ratio of 5 to 90%. The coverage ratio can be adjusted by adjusting the formulation amount of the conductive material 121. The paste thus obtained is coated onto the conductive substrate 103, and then the coating is dried to form the resin layer 105. Subsequently, the active material layer 115 is formed onto the resin layer 105 to prepare the electrode structure 117. Regarding the electrode structure 117 of this embodiment, there were many cut offs in the conductive path among the conductive materials 121 caused by the expansion of the aggregate 131 of the polyolefin-based emulsion particles at high temperature conditions. Accordingly, the shut down effect was large.

### (1-2) Polymer Coagulant and Low Molecular Coagulant Used

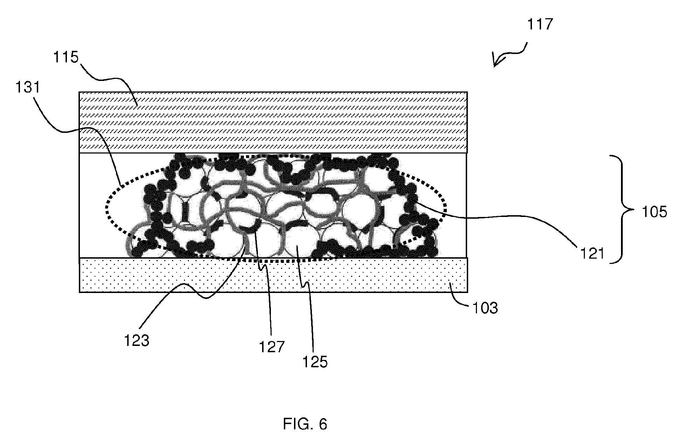

FIG. 6 is a schematic view showing a condition inside the resin layer of the electrode structure under normal temperature conditions, according to the present embodiment (a case where conductive material is added after aggregating the polyolefin-based emulsion particles by using the polymer coagulant and low molecular coagulant). First, the aggregate 131 of 0.5 to 5µm is formed by adding the polymer coagulant 123 and the low molecular coagulant 127 to the polyolefin-based emulsion particles 125 (for example, water borne emulsion such as polypropylene), followed by mixing. Here, since the polymer coagulant 123 and the low molecular coagulant 127 are used in combination, the average particle diameter of the aggregate 131 tends to become large.

Then, conductive material 121 is further added, followed by mixing, thereby allowing the conductive material 121 to adhere onto the surface of the aggregate 131 to achieve the coverage ratio of 5 to 90%. The coverage ratio can be adjusted by adjusting the formulation amount of the conductive material 121. The paste thus obtained is coated onto the conductive substrate 103, and then the coating is dried to form the resin layer 105. Subsequently, the active material layer 115 is formed onto the resin layer 105 to prepare the electrode structure 117. Regarding the electrode structure 117 of this embodiment, there were many cut offs in the conductive path among the conductive materials 121 caused by the expansion of the aggregate 131 of the polyolefin-based emulsion particles at high temperature conditions. Accordingly, the shut down effect was large.

### (2) Form Having Conductive Material Also Inside the Aggregate (Surface of Primary Particles)

### (2-1) Only Polymer Coagulant Used

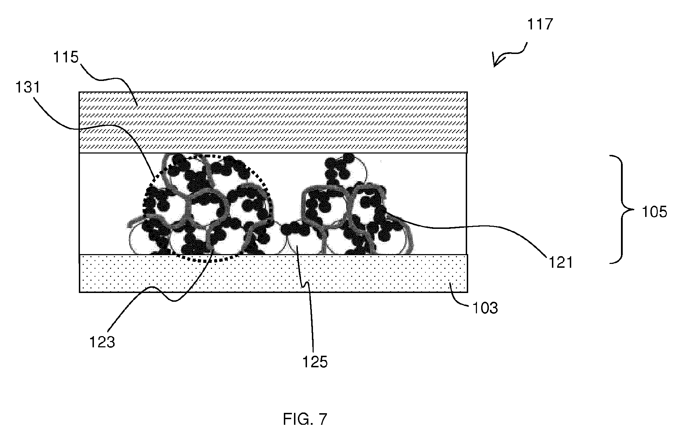

FIG. 7 is a schematic view showing a condition inside of the resin layer of the electrode structure under normal temperature conditions, according to the present embodiment (a case where the polyolefin-based emulsion particles are aggregated by using the polymer coagulant after conductive material is added). First, the conductive material 121 is added to the polyolefin-based emulsion particles 125 (for example, water borne emulsion such as polypropylene), followed by mixing. Accordingly, the conductive material 121 is adhered onto the surface of the polyolefin-based emulsion particles 125 so that the coverage ratio would be 5 to 90%. The coverage ratio can be adjusted by adjusting the formulation amount of the conductive material 121.

Then, polymer coagulant 123 is further added, followed by mixing, thereby forming the aggregate 131 of 0.5 to 5µm. Here, since only the polymer coagulant 123 is used, the average particle diameter of the aggregate 131 tends to become small. Then, since the aggregate 131 is obtained by aggregating the polyolefin-based emulsion particles 125 being covered with the conductive material 121 by a coverage ratio of 5 to 90%, the coverage ratio of the aggregate 131 by the conductive material 121 would be also 5 to 90%. The paste thus obtained is coated onto the conductive substrate 103, and then the coating is dried to form the resin layer 105. Subsequently, the active material layer 115 is formed onto the resin layer 105 to prepare the electrode structure 117. Regarding the electrode structure 117 of this embodiment, there are many conductive paths among the conductive materials 121 since the conductive material 121 exist also in the aggregate 131 (surface of the primary particles). Accordingly, the resistance under normal temperature conditions can be suppressed.

### (2-2) Polymer Coagulant and Low Molecular Coagulant Used

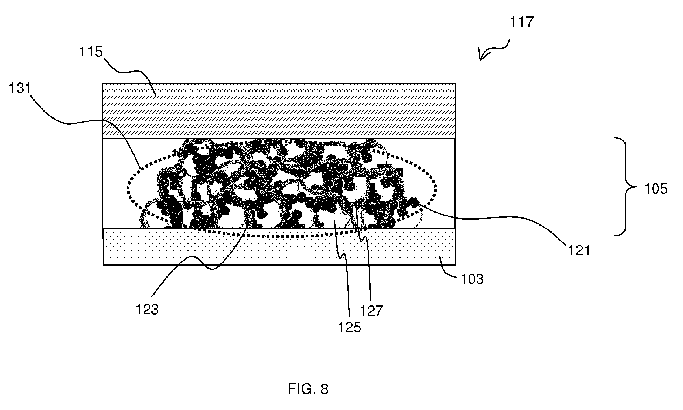

FIG. 8 is a schematic view showing a condition inside of the resin layer of the electrode structure under normal temperature conditions, according to the present embodiment (a case where the polyolefin-based emulsion particles are aggregated by using the polymer coagulant and low molecular coagulant after conductive material is added). First, the conductive material 121 is added to the polyolefin-based emulsion particles 125 (for example, water borne emulsion such as polypropylene), followed by mixing. Accordingly, the conductive material 121 is adhered onto the surface of the polyolefin-based emulsion particles 125 so that the coverage ratio would be 5 to 90%. The coverage ratio can be adjusted by adjusting the formulation amount of the conductive material 121.

Then, polymer coagulant 123 is further added, followed by mixing, thereby forming the aggregate 131 of 0.5 to 5µm. Here, since the polymer coagulant 123 and the low molecular coagulant are used in combination, the average particle diameter of the aggregate 131 tends to become large. Then, since the aggregate 131 is obtained by aggregating the polyolefin-based emulsion particles 125 being covered with the conductive material 121 by a coverage ratio of 5 to 90%, the coverage ratio of the aggregate 131 by the conductive material 121 would be also 5 to 90%. The paste thus obtained is coated onto the conductive substrate 103, and then the coating is dried to form the resin layer 105. Subsequently, the active material layer 115 is formed onto the resin layer 105 to prepare the electrode structure 117. Regarding the electrode structure 117 of this embodiment, there are many conductive paths among the conductive materials 121 since the conductive material 121 exist also in the aggregate (surface of the primary particles). Accordingly, the resistance under normal temperature conditions can be suppressed.

### (6. Coagulant)

As the coagulant of the present embodiment added to the paste to form the aggregate 131, any coagulant can be used so long as the coagulant can aggregate a plurality of polyolefin-based emulsion particles 125 to form a larger structure. When the polymer coagulant 123 is used, although there is no particular limitation regarding the polymer coagulant 123, it is preferable that the polymer coagulant 123 contains at least one polymer selected from the group consisting of sodium polyacrylate, urethane modified polyether, and sodium polyacrylate sulfonate. Here, such polymer has been confirmed of its superior coagulating effect as described in the following Examples.

In addition, taking into consideration that the polymer coagulant 123 entangle with the emulsion particles 125 so as to stretch a net over the emulsion particles 125, thereby forming the aggregate 131 having an average particle diameter of 0.5 to 5µm, it is preferable that the number average molecular weight of the polymer coagulant 123 is 10x10⁴ or more, more preferably 15x10⁴ or more, and especially preferably 20x10⁴ or more.

Further, from the same reasons, the number average molecular weight of the polymer coagulant 123 is preferably 100x10⁴ or less, more preferably 80x10⁴ or less, and further preferably 50x10⁴ or less. When the number average molecular weight of the polymer coagulant 123 is less than 10x10⁴, the average particle diameter of the aggregate 131 tends to be less than 0.5µm.

On the other hand, when the number average molecular weight of the polymer coagulant 123 exceeds 100x10⁴, it would become difficult to dissolve the polymer coagulant 123 in aqueous solution. Accordingly, it would become difficult to disperse the polymer coagulant, thereby failing to form the aggregate particles or forming aggregates with a size exceeding 5µm, which are undesirable. Here, the number average molecular weight can be in the range of two values selected among 10x10⁴, 15x10⁴, 20x10⁴, 25x10⁴, 30x10⁴, 35x10⁴, 40x10⁴, 45x10⁴, 50x10⁴, 55x10⁴, 60x10⁴, 65x10⁴, 70x10⁴, 75x10⁴, 80x10⁴, 85x10⁴, 90x10⁴, 95x10⁴, and 100x10⁴.

On the other hand, when the low molecular coagulant 127 is used, although there is no particular limitation regarding the low molecular coagulant 127, it is preferable that the low molecular coagulant 127 contains at least one low molecular compound selected from the group consisting of sodium polyacrylate, urethane modified polyether, and sodium polyacrylate sulfonate. Here, such low molecular compound has been confirmed of its superior coagulating effect as described in the following Examples.

In addition, taking into consideration that the low molecular coagulant 127 connects each of the emulsion particles 125, and further adhere the connected emulsion particles 125 tightly, it is preferable that the number average molecular weight of the low molecular coagulant 127 is 10x10³ or less, more preferably 8000 or less, and especially preferably 7000 or less. When the number average molecular weight of the low molecular coagulant 127 is in the range of more than 10x10³ and less than 10x10⁴, the low molecular coagulant 127 would get caught in between the emulsion particles 125 as a foreign substance, providing distance between the emulsion particles 135, thereby resulting in defects such as increase in the resistance at room temperature. The polymer coagulant 123 and the low molecular coagulant 127 can be used alone, or can be used in combination.

There is no particular limitation regarding the formulation amount of the polymer coagulant 123 and/or low molecular coagulant 127. Here, it is preferable that the formulation amount of each of the polymer coagulant 123 and/or low molecular coagulant 127 is 0.0001 to 0.1 parts by mass, more preferably 0.001 to 0.01 parts by mass with respect to 100 parts by mass of the resin component of the polyolefin-based emulsion particles 125. When the formulation amount is less than 0.0001 parts by mass, there are cases where sufficient amount of deformation due to thermal expansion cannot be obtained when the temperature is raised. In addition, when the formulation amount of the polymer coagulant 123 and/or low molecular coagulant 127 with respect to 100 parts by mass of the resin component of the polyolefin-based emulsion particles 125 exceeds 0.01 parts by mass, the aggregation would proceed to far, and thus the expansion occur in the surface direction rather than the thickness direction, thereby resulting in cases where the conductive path cannot be cut off sufficiently when the temperature is raised.

### (7. Resin Layer)

FIG. 1 is a cross-sectional view showing a structure of a current collector according to the present embodiment. The current collector 100 of the present embodiment has a resin layer 105 using the afore-mentioned paste. When the resin layer 105 is used in the positive electrode, this resin layer 105 is preferably provided on the conductive substrate 103 as the resin layer 105 having the PTC function. In such case, the resin layer 105 is provided separately from the active material layer 115.

There is no particular limitation regarding the method for forming the resin layer 105 having conductivity used in the present embodiment. Preferably, the polyolefin-based emulsion particles 125, conductive material 121, and the polymer coagulant 123 and/or low molecular coagulant 127 are mixed in water or in aqueous solution to prepare a composition for current collector (paste), and then this composition for current collector (paste) is coated onto the conductive substrate 103. In the coating process, a roll coater, a gravure coater, a slit die coater and the like can be used.

In the current collector 100 of the present embodiment, the coating amount (coating weight) of the composition for current collector (paste) for forming the resin layer 105 is preferably 0.5 to 20 g/m², more preferably 1 to 10 g/m², and especially preferably 2 to 5 g/m². When the coating amount is less than 0.5 g/m², there would be cases where resistance does not increase when the temperature is raised. On the other hand, when the coating amount exceeds 20 g/m², there would be cases where the resistance under normal temperature conditions (30°C), becomes too high. Here, the coating amount can be in the range of two values selected among 0.5, 1, 2.5, 5, 10, and 20 g/m².

After coating the composition for current collector (paste) onto the conductive substrate 103, baking is performed to cure the composition for current collector, thereby forming the resin layer 105. There is no particular limitation regarding the baking temperature. Here, for example, the baking temperature is preferably 80 to 240°C. When the baking temperature is below 80°C, the curing degree would be insufficient, resulting in cases where the adhesion of the conductive substrate with the resin layer 105 is insufficient. On the other hand, when the baking temperature exceeds 240°C, the resin may melt depending on the type of polyolefin-based resin used, resulting in change in the arrangement of the conductive material. This can cause problems since the PTC function cannot be realized. Here, the baking temperature can be in the range of two values selected among 80, 90, 100, 110, 120, 130, 140, 150, 160, 170, 180, 190, 200, 220, and 240°C.

There is no particular limitation regarding the baking period. For example, the baking period is preferably 5 to 200 seconds. When the baking period is less than 5 seconds, the curing degree would be insufficient, resulting in cases where the adhesion of the conductive substrate with the resin layer 105 is insufficient. On the other hand, when the baking period exceeds 200 seconds, the productivity would become low, while improvement in performance cannot be obtained, which would be meaningless. Here, the baking period can be in the range of two values selected among 5, 10, 20, 30, 40, 50, 60, 70, 80, 90, 100, 120, 140, 160, 180, and 200 seconds.

### (8. Electrode Structure For Battery)

FIG. 2 is a cross-sectional view showing a structure of an electrode structure prepared by using the current collector of the present embodiment. The electrode structure 117 can be obtained by forming the active material layer 115 on the resin layer 105 of the current collector 100 of the present embodiment. Then, a separator impregnated with an electrolyte solution is sandwiched in between this electrode structure 117 as the positive electrode and another electrode structure separately prepared as the negative electrode, thereby preparing a non-aqueous electrolyte battery such as a lithium ion secondary battery.

Here, as the active material layer 115 provided to the electrode structure 117 of the present embodiment, the one used for the non-aqueous electrolyte batteries can suitably be used. For example, when the electrode structure 117 for the positive electrode is prepared, a current collector 100 using an aluminum alloy foil as the conductive substrate 103 is coated with a paste prepared by dispersing LiCoO₂, LiMnO₄, LiNiO₂ and the like as the active material and carbon black such as acetylene black as the conductive material in PVDF or water dispersion type PTFE as the binder. The paste thus coated is dried to form the active material layer 115.

When the electrode structure 117 for the negative electrode is prepared, a current collector 100 using copper foil as the conductive substrate 103 is coated with a paste prepared by dispersing black lead, graphite, mesocarbon microbeads and the like as the active material in CMC (carboxymethyl cellulose) as the thickener followed by mixing with SBR (styrene butadiene rubber) as the binder. The paste thus coated is dried to form the active material layer 115.

### (9. Electrode Structure For Capacitor)

The electrode structure 117 can be obtained by forming the electrode material layer 115 on the resin layer 105 of the current collector 100 of the present embodiment. Then, a separator impregnated with an electrolyte solution is sandwiched in between this electrode structure 117 as the positive electrode and another electrode structure 117 as the negative electrode, thereby preparing a capacitor for electrical double layer capacitor, lithium ion capacitor and the like.

Here, as the electrode material 115, the one conventionally used for the electrode material of the electrical double layer capacitor and lithium ion capacitor can be used. For example, carbon powders such as active charcoal and black lead, and carbon fibers can be used. As the binder, for example, PVDF (polyvinylidene difluoride), SBR, water dispersion type PTFE and the like can be used.

### (10. Performance of Electrode Structure)

The electrode structure 117 was used as the positive electrode, and another electrode structure 117 was used as the negative electrode. A separator impregnated with the electrolyte solution was sandwiched in between these electrode structures and the AC impedance Zre was measured under 1Hz. It is preferable that the resistance is 200Ωcm² or lower at 30°C, and the maximum resistance is 400Ωcm² or higher at 80°C or higher and 165°C or lower. When the AC impedance Zre exceeds 200Ωcm² at 30°C, the high rate characteristics during high speed charge/discharge is insufficient, and thus the electrode structure is not suitable for high speed charge/discharge under normal conditions. On the other hand, when the AC impedance Zre shows maximum resistance of lower than 400Ωcm² at 80°C or higher and 165°C or lower, the shut down function at elevated temperature would be insufficient, thereby failing to prevent thermal runaway.

As for the separator, a film having a polyolefin microporous and non-woven fabric can be used for example. As for the non-aqueous electrolyte, there is no limitation so long as there is no side reaction such as decomposition when used within a voltage range for non-aqueous electrolyte battery, electrical double layer capacitor, and lithium ion capacitor. For example, as the positive ion, tertiary ammonium salts such as tetraethyl ammonium salt, triethylmethyl ammonium salt, and tetrabutyl ammonium salt can be used. As the negative ion, hexafluoro phosphate salt, tetrafluoro borate salt, and perchloric salt can be used.

As the non-aqueous solvent, aprotic solvents such as carbonates, esters, ethers, nitriles, sulfonic acids, and lactones can be used. For example, one or more non-aqueous solvents selected from the group consisting of ethylene carbonate (EC), propylene carbonate (PC), diethyl carbonate (DEC), dimethyl carbonate (DMC), ethylmethyl carbonate (EMC), 1,2-dimethoxy ethane, 1,2-diethoxy ethane, tetrahydrofuran, 2-methyl tetrahydrofuran, dioxiane, 1,3-dioxolane, diethylene glycol dimethyl ether, ethylene glycol dimethyl ether, acetonitrile, propionitrile, nitromethane, N,N-dimethylformamide, dimethyl sulfoxide, sulforane, γ-butyrolactone can be used.

The embodiments of the present invention were described with reference to the Drawings. Here, such embodiments are merely an exemplification, and thus various structures other than the ones mentioned above can be adopted.

### EXAMPLES

Hereinafter, the present invention will be described in detail with reference to Examples. However, the present invention shall not be limited to these.

### (1) Preparation of Coating and Application Thereof

As shown in Table 1, the coatings (pastes) were prepared by performing two-stage agitation of agitation process 1 and agitation process 2. Each of the agitation process were performed using a disper, with a rotation number of 1000 rpm and an agitation period of 60 minutes. (Here, in Tables 1 and 2, PP and PE means polypropylene and polyethylene, respectively. Further, the addition amount of the conductive material and the coagulant are given as the addition amount with respect to 100 parts by mass of the base resin.) The coating (paste) was coated onto one side of an aluminum foil (JIS A1085) having a thickness of 15µm using a bar coater by a coating amount (coating weight, weight per unit area) as shown in Table 3. Subsequently, the coating was subjected to baking for 24 seconds with a peak metal temperature (PMT) of 110°C to give a current collector.

[Table 1]

**Table 1**

| | | base resin | | agitation process 1 | | | |
|---|---|---|---|---|---|---|---|
| | | type of resin | addition amount (parts by mass) | conductive material | | coagulant | |
| | | | | type | addition amount (parts by mass) | type | addition amount (parts by mass) |
| Example | 1 | PP | 100 | acetylene black | 30 | none | - |
| | 2 | PP | 100 | acetylene black | 30 | none | - |
| | 3 | acrylic acid modified PP | 100 | acetylene black | 30 | none | - |
| | 4 | acrylic acid modified PP | 100 | acetylene black | 30 | none | - |
| | 5 | acrylic acid modified PE | 100 | acetylene black | 15 | none | - |
| | 6 | acrylic acid modified PE | 100 | acetylene black | 40 | none | - |
| | 7 | maleic acid modified PP | 100 | none | - | sodium polyacrylate (molecular weight 2x10⁵) | 0.001 |
| | 8 | maleic acid modified PP | 100 | none | - | sodium polyacrylate (molecular weight 2x10⁵) | 0.01 |
| | | | | | | urethane modified polyether (molecular weight 5000) | 0.01 |
| | 9 | PE | 100 | acetylene black | 20 | none | - |
| | 10 | ethylene-glycidyl ether copolymer | 100 | acetylene black | 20 | none | - |
| | 11 | acrylic acid modified PE-PP copolymer | 100 | acetylene black | 20 | none | - |
| | 12 | maleic acid modified PE-PP copolymer | 100 | acetylene black | 20 | none | - |
| | 13 | PP | 100 | acetylene black | 20 | none | - |
| | 14 | PP | 100 | acetylene black | 20 | none | - |
| | 15 | acrylic acid modified PE | 100 | acetylene black | 5 | none | - |
| | 16 | acrylic acid modified PE | 100 | acetylene black | 100 | none | - |
| | 17 | acrylic acid modified PE | 100 | acetylene black | 8 | none | - |
| Comparative Example | 18 | acrylic acid modified PP(90) melamine (10) | 100 | acetylene black | 20 | none | - |
| | 19 | PP | 100 | acetylene black | 20 | none | - |
| | 20 | acrylic resin | 100 | acetylene black | 20 | none | - |

[Table 2]

**Table 2**

| | | agitation process 2 | | | |
|---|---|---|---|---|---|
| | | conductive material | | coagulant | |
| | | type | addition amount (parts by mass) | type | addition amount (parts by mass) |
| Example | 1 | none | - | sodium polyacrylate (molecular weight 2 x 10⁵) | 0.001 |
| | 2 | none | - | sodium polyacrylate (molecular weight 2 x 10⁵) | 0.001 |
| | 3 | none | - | urethane modified polyether (molecular weight 3x10⁵) | 0.0001 |
| | 4 | none | - | sodium polyacrylate (molecular weight 2 x 10⁵) | 0.01 |
| | | | | urethane modified polyether (molecular weight 5000) | 0.01 |
| | 5 | none | - | sodium polyacrylate (molecular weight 2 x 10⁵) | 0.001 |
| | 6 | none | - | sodium polyacrylate (molecular weight 2 x 10⁵) | 0.001 |
| | 7 | acetylene black | 20 | none | - |
| | 8 | acetylene black | 20 | none | - |
| | 9 | none | - | urethane modified polyether (molecular weight 3 x 10⁵) | 0.001 |
| | 10 | none | - | urethane modified polyether (molecular weight 3 x 10⁵) | 0.001 |
| | 11 | none | - | sodium polyacrylate sulfonate (molecular weight 25 x 10⁴) | 0.001 |
| | 12 | none | - | sodium polyacrylate sulfonate (molecular weight 25 x 10⁴) | 0.001 |
| | 13 | none | - | sodium polyacrylate (molecular weight 2 x 10⁵) | 0.001 |
| | 14 | none | - | sodium polyacrylate (molecular weight 2 x 10⁵) | 0.001 |
| | 15 | none | - | sodium polyacrylate (molecular weight 2 x 10⁵) | 0.001 |
| | 16 | none | - | sodium polyacrylate (molecular weight 2 x 10⁵) | 0.001 |
| | 17 | none | - | sodium polyacrylate (molecular weight 2 x 10⁵) | 0.001 |
| Comparative Example | 18 | none | - | sodium polyacrylate (molecular weight 2 x 10⁵) | 0.001 |
| | 19 | none | | sodium polyacrylate (molecular weight 2 x 10⁵) | 0.2 |
| | 20 | none | - | sodium polyacrylate (molecular weight 2 x 10⁵) | 0.001 |

[Table 3]

**Table 3**

| | | coating weight of coating (g/m²) | average particle diamter of aggregate (*µ*m) | coverage ratio by conductive material (%) | resistace at 30°C (Ωcm²) | maximun resistance at 80°C or higher and 165°C or lower (Ωcm²) |
|---|---|---|---|---|---|---|
| Example | 1 | 0.6 | 3.2 | 51 | 46 | 410 |
| | 2 | 20 | 3.1 | 49 | 198 | 5820 |
| | 3 | 3.1 | 0.5 | 50 | 118 | 520 |
| | 4 | 3.2 | 5.0 | 52 | 164 | 6140 |
| | 5 | 2.9 | 3.0 | 11 | 128 | 7400 |
| | 6 | 3.0 | 3.1 | 90 | 36 | 2370 |
| | 7 | 3.2 | 3.2 | 60 | 124 | 8540 |
| | 8 | 3.1 | 4.9 | 61 | 142 | 10120 |
| | 9 | 3.3 | 2.8 | 53 | 68 | 5640 |
| | 10 | 3.2 | 2.5 | 52 | 90 | 4400 |
| | 11 | 3.3 | 2.6 | 52 | 96 | 4360 |
| | 12 | 3.1 | 2.8 | 51 | 98 | 4430 |
| | 13 | 0.3 | 3.3 | 49 | 40 | 380 |
| | 14 | 22 | 3.1 | 48 | 210 | 6230 |
| | 15 | 3.0 | 3.3 | 3 | 205 | 8200 |
| | 16 | 3.0 | 3.1 | 100 | 30 | 390 |
| | 17 | 3.1 | 3.1 | 5 | 198 | 7970 |
| Comparative Example | 18 | 2.9 | 0.3 | 48 | 150 | 350 |
| | 19 | 25 | 8 | 52 | 390 | 6700 |
| | 20 | 3.0 | 2.9 | 53 | 42 | 240 |

### <Evaluation Method>

### (1) Coating Amount (Coating Weight, Weight Per Unit Area)

The coated foil was cut into 100mm squares, and the weight was measured. After removing the coating, the weight was measured again, and the coating amount (coating weight, weight per unit area) was calculated as a balance. The results of measurement are shown in Table 2.

### (2) Particle Diameter of Aggregate

The particle diameter of the aggregate was obtained by measuring the particle diameter distribution of the coating (paste) prepared without adding the conductive material, using the particle size analyzer. Here, a laser diffraction/scattering particle size distribution analyzer LA-950V2 available from HORIBA, Ltd. was used as the particle size analyzer to calculate the volume average particle diameter.

### (3) Coverage Ratio by Conductive Material

The coverage ratio by the conductive material was measured as follows. First, the coating (paste) was coated, followed by exposure of the cross section of the coating by ion milling. Subsequently, the cross section of the resin layer was observed using a field emission type scanning microscope available from Hitachi High-Technologies Corporation. The ratio of the surface of the aggregate being covered with the conductive material was taken as the coverage ratio by the conductive material. Here, regarding the position of observation, the coating was cut at 10 portions to expose the cross sections, and then 10 arbitrary portions for each of the cross sections were selected (100 in total). The average of the coverage ratio obtained from each of the observation made at each of the selected portions was then calculated.

### (4) Measurement of Resistance

The active material paste (active material: LMO, binder: PVDF, conductive assistant: acetylene black) was coated onto the current collector prepared as above. The coating was then dried, pressed, and punched out by 1615.95mmϕ, thereby obtaining an electrode. A separator (cellulose-based material) impregnated with an electrolyte solution (composition: 1mol/L LiBF₄ in EC:EMC (1:3 V/V%) was sandwiched in between two of these electrodes so that the coated surfaces face each other, thereby obtaining a cell. The cell thus obtained was subjected to AC impedance measurement with an amplitude of 30mV and a frequency of 1Hz, while raising the temperature in the oven from ambient temperature (30°C or lower) to 165°C at the rate of 5°C/min, using VersaSTAT4 available from Princeton Applied Research. Here, the Zre at 1Hz was taken as the resistance. The AC impedance Zre shows the resistance component of the impedance.

Here, the one having lower resistance at 30°C is superior in charge/discharge characteristics, and can be applied for batteries with high output. As a criterion, the resistance of 200Ωcm² or lower would enable usage in general batteries. On the other hand, higher shut down effect can be obtained when the maximum resistance at 80 to 165°C is higher. As a criterion, maximum resistance of 400Ωcm² or higher would allow realization of the shut down effect in general batteries in case of overcharge.

### <Discussion on Results>

From the above experimental results, it can be said that when the polyolefin-based emulsion particles are used as the base resin and the coating weight of the coating, average particle diameter of the aggregate, and coverage ratio of the aggregate by the conductive material are in the preferable range, the initial resistance can be lowered and the PTC magnification can be increased.

On the other hand, when the coating weight is less than 0.3g/m², the resistance cannot sufficiently be raised when the temperature is raised, and when the bases weight exceeds 22g/m², the resistance at 30°C would become too high.

In addition, when the average particle diameter of the aggregate of the emulsion particles is less than 0.5µm, the amount of deformation by thermal expansion would be insufficient at elevated temperature. On the other hand, when the average particle diameter exceeds 5µm, the coating would become too thick, thereby resulting in defects such as increase in the resistance at room temperature and separation of the composition due to unstable emulsion solution.

Further, when the coverage ratio of the aggregate by the conductive material is less than 5%, the maximum resistance at elevated temperature would become high, however, the battery characteristics regarding normal usage would be inferior. On the other hand, when the coverage ratio exceeds 90%, the maximum resistance at elevated temperature would become low, resulting in low cut off effect of the conductive path.

In addition, when the coagulant and the crosslinker are used in combination, the resistance at 30°C would become too high.

Further, when the base resin other than the polyolefin-based ones was used, the maximum resistance at 80 to 165°C was low and the shut down function was insufficient.

Accordingly, the present invention has been described with reference to the Examples. Here, these Examples are merely exemplification. The person having ordinary skill in the art shall understand that various alteration can be made, and that such alterations are within the scope of the present invention.

### EXPLANATION OF SYMBOLS

- 100:: current collector
- 103:: conductive substrate
- 105:: resin layer
- 115:: active material layer
- 117:: electrode structure
- 121:: conductive material
- 123:: polymer coagulant
- 125:: polyolefin-based emulsion particles
- 127:: low molecular coagulant
- 131:: aggregate

## Claims

1. A current collector, comprising:
a conductive substrate; and
a resin layer provided on at least one side of the conductive substrate; wherein
the resin layer is formed with a paste comprising:
an aggregate of polyolefin-based emulsion particles; and
a conductive material; and
the aggregate has an average particle diameter of 0.5 to 5µm.

2. The current collector of Claim 1, wherein a surface of the aggregate is covered with the conductive material by 5 to 90%.

3. The current collector of Claim 1 or 2, wherein the polyolefin-based emulsion particles contain at least one resin selected from the group consisting of a polypropylene resin, a polyethylene resin, a polypropylene copolymer resin, and a polyethylene copolymer resin.

4. The current collector of any one of Claims 1 to 3, further comprising a polymer coagulant and/or a low molecular coagulant.

5. The current collector of Claim 4, wherein:
the polymer coagulant is at least one polymer having a number average molecular weight of 10x10⁴ or more, selected from the group consisting of sodium polyacrylate, urethane modified polyether, and sodium polyacrylate sulfonate; and
the low molecular coagulant is at least one low molecular compound having a number average molecular weight of 10x10³ or less, selected from the group consisting of sodium polyacrylate, urethane modified polyether, and sodium polyacrylate sulfonate.

6. The current collector of any one of Claims 1 to 5, wherein the conductive material comprises carbon powders or metal powders.

7. The current collector of any one of Claims 1 to 6, wherein the conductive substrate is aluminum, aluminum alloy, or copper.

8. The current collector of any one of Claims 1 to 7, wherein an AC impedance Zre measured under 1Hz when a separator impregnated with an electrolyte solution is sandwiched in between the current collectors having an active material layer provided on the resin layer, the current collectors facing each other, is:
200Ωcm² or lower at 30°C; and
a maximum resistance is 400Ωcm² or higher at 80 to 165°C.

9. An electrode structure comprising the current collector of any one of Claims 1 to 8.

10. A battery or a capacitor comprising the electrode structure of Claim 9.
